# EUROPÄISCHE PATENTSCHRIFT

(11) **EP 1 779 067 B1**
(45) Veröffentlichungstag und Bekanntmachung des Hinweises auf die Patenterteilung: **08.04.2009**
(21) Anmeldenummer: 05752638.6
(22) Anmeldetag: 16.06.2005
(51) Int. Cl.: G01C 21/34

(54) **VERFAHREN ZUR NAVIGATION**
NAVIGATION METHOD
PROCEDE DE NAVIGATION

(30) Priorität: 14.08.2004 DE 102004039465
(43) Veröffentlichungstag der Anmeldung: 02.05.2007
(73) Patentinhaber: ROBERT BOSCH GMBH, 70442 Stuttgart (DE)
(72) Erfinder: FRIEDRICHS, Arne, 38114 Braunschweig (DE); DRAEGER, Gerd, 38102 Braunschweig (DE); LAEDKE, Michael, 31134 Hildesheim (DE)
(86) Internationale Anmeldenummer: PCT/EP2005/052792
(87) Internationale Veröffentlichungsnummer: WO 2006/018337

(56) Entgegenhaltungen:
- EP-A- 1 092 950
- EP-B- 1 141 910

## Beschreibung

Die vorliegende Erfindung betrifft ein Verfahren zur Navigation von einem Startort zu einem Zielort, bei dem eine Gesamtroute berechnet wird, die zumindest in zwei Teilrouten aufgeteilt wird, von denen zumindest eine Teilroute lokal in einem mobilen Navigationsclient mit Kartendaten, die eine eingeschränkte Aktualität und/oder Abdeckung aufweisen und zumindest eine weitere Teilroute zentral in einem stationären Routenserver berechnet wird.

Navigationsmteme haben in den letzten Jahren eine weite Verbreitung gefunden. Derzeit finden insbesondere autarke Navigatidnssysteme eine starke Verwendung, die selbständig arbeiten und selbst die Routenberechnung durchführen. Diese Navigationssysteme befinden sich in dem zu navigierenden Fortbewegungsmittel, beispielsweise im Kraftfahrzeug, Flugzeug oder Schiff, und sind somit mobil.

Ferner sind Navigationssysteme bekannt, bei denen eine stationäre Zentraleinheit mit einem Server die Route berechnet. Das zu navigierende Fortbewegungsmittel kommuniziert hierbei, beispielsweise über Mobilfunk oder dergleichen, mit der Zentrale. Von dem Fortbewegungsmittel werden die aktuellen Positionsdaten und die Zielvorgabe an die Zentrale gesendet, die daraufhin die Route berechnet und die vollständig berechnete Route an das Fortbewegungsmittel überträgt.

Weiterhin ist auch eine Kombination beider Verfahren, eine so genannte Hybrid-Navigation, bekannt, bei der die Routenberechnung auf Anforderung dezentraler Navigationsclients durch den stationären Routenserver erfolgt und dem jeweiligenNavigationsclient die berechnete Route übermittelt wird. Die Navigationsclients sind aber auch zur eigenständigen Routenberechnung geeignet.

EP 1 092 950 A1 offenbart ein Verfahren zur Bestimmung einer Fahrtroute für ein Straßenfahrzeug zwischen einem Start- und einem Zielort. Es werden mindestens zwei Datenbanken mit Landkartendaten zu benachbarten geographischen Gebieten in die Berechnung einbezogen, wobei Start- und Zielort nicht in der gleichen Datenbank liegen. Die Routenberechnung zwischen Start- und Zielort wird unter Berücksichtigung von gemeinsamen Grenzpunkten von Datenbanken zu benachbarten geographischen Gebieten durchgeführt.

So beschreibt die EP 1 141 910 B1 ein Verfahren zur Navigation, bei dem entweder ein Internzielführungsalgorithmus eines Navigationssystems eine Zielführung auf der Basis eines intern berechneten Routenanteils oder ein Externzielführungsalgorithmus eine Zielführung auf der Basis eines extern berechneten Routenanteiles durchführt.

Bei einem derartigen Hybridverfahren, also einer Kombination aus interner und externer Routenberechnung, besteht jedoch der wesentliche Nachteil, dass eine neu zu berechnende Route in zwei Teilabschnitte bzw. Teilrouten zerlegt werden muss, die vollkommen unabhängig voneinander berechnet wurden. Die dann zusammengefügte Gesamtroute bildet in der Regel nicht das tatsächlich gesuchte Optimum ab, da die Teilrouten auf Grundlage unterschiedlicher, jeweils unvollständiger Datenbanken berechnet wurden.

Vor diesem Hintergrund ist es die Aufgabe der vorliegenden Erfindung, ein Navigationsverfahren der gattungsgemäßen Art zu verbessern.

Zur Lösung dieser Aufgabe ist erfindungsgemäß vorgesehen, dass zumindest ein Übergabepunkt als Endpunkt einer ersten Teilroute und Startpunkt einer zweiten Teilroute in Abhängigkeit von dem geographischen Abstand der möglichen Übergabepunkte zum Zielort und der resultierenden Gesamtroute ermittelt wird.

Das den Übergabepunkt bestimmende Navigationssystem, entweder der mobile Navigationsclient oder der stationäre Routenserver, ermitteln den Übergabepunkt nicht nur auf Grundlage der jeweils eigenen Datenbank; sondern vielmehr auf Grundlage der beiden Systemen in der Gesamtheit zur Verfügung stehenden Informationen. Durch den Rückgriff auf beide Systeme, die zur Routenberechnung miteinander kommunizieren, ist die Berechnung einer, optimaleren Route im Hinblick auf die Fahrtzeit und/oder Fahrtstrecke möglich, als im Vergleich zu bekannten Hybrid-Navigationsverfahren. Die Übergangspunkte werden zwischen einer Karte mit eingeschränkter Abdeckung oder Aktualität und einer externen Karte mit nahezu vollständiger Abdeckung ermittelt, wobei sich die vom mobilen Navigationsclient und dem stationären Routenserver berücksichtigende Gebiete nicht eindeutig voneinander abgrenzen. Die Übergangspunkte werden nicht einfach auf die gegebenenfalls nicht verfügbaren Grenzen zwischen interner und externer digitaler Karte gesetzt. Vielmehr erfolgt die Ermittlung der Übergangspunkte neben der Berücksichtigung der resultierenden Gesamtroute in Abhängigkeit von dem geographischen Abstand der möglichen Übergabe zum Zielort. Damit sind optimale Übergabepunkte unabhängig von Kartengrenzen bestimmbar.

Ein vorteilhaftes Ausführungsbeispiel des erfindungsgemäßen Verfahrens weist folgende Schritte auf:
- Erkennen, dass die Gesamtroute zum Zielort lokal nicht berechenbar ist;
- Übermitteln des Zielortes von dem mobilen Navigationsclient an einen stationären Routenserver;
Übermitteln einer Ziel-Liste an den mobilen Navigationsclient ;
- Bestätigen eines Ziels durch den Nutzer im Navigationsclient;
- Ermitteln zumindest eines Übergabepunktes;
- Übermitteln des Übergabepunktes an den Routenserver;
- Berechnen der jeweiligen Teilroute von dem ausgewählten Übergabepunkt zu dem Zielort in dem stationären Routenserver;
- Übermitteln der jeweiligen, berechneten Teilroute an den mobilen Navigationsclient.

Eine vorteilhafte Ausführungsform des erfindungsgemäßen Verfahrens sieht vor, dass als Übergabepunkt der Punkt auf der lokal berechenbaren Teilroute ausgewählt wird, der den kürzesten geografischen Abstand zu dem Zielort aufweist. Die Auswahl kann dabei sowohl von dem stationären Routenserver erfolgen, das im Allgemeinen über ein vollständigeres Kartenmaterial verfügt. Es ist aber gleichermaßen möglich, dass das mobile Navigationsclient den Übergabepunkt bestimmt, nachdem der stationäre Routenserver die Koordinaten der Zielvorgabe übermittelt hat.

Eine alternative vorteilhafte Ausführungsform des erfindungsgemäßen Verfahrens sieht vor, dass als Übergabepunkt ein Punkt auf der lokal berechenbaren Teilroute ausgewählt wird, der zwischen dem Startpunkt und dem Punkt auf der Teilroute liegt, der den kürzesten geografischen Abstand zu dem Zielort aufweist. Da im Allgemeinen die berechnete Fahrtstrecke nicht der Luftlinie entspricht, kann ein auf diese Weise ermittelter Übergabepunkt zu einer Gesamtroute führen, die eine geringere Streckenlänge aufweist.

Eine bevorzugte Ausführungsform des erfindungsgemäßen Verfahrens weist folgende Schritte auf:
- Vorauswählen mehrerer Punkte auf der lokal berechenbaren Teilroute, die zwischen dem Startpunkt und dem Punkt auf der Teilroute liegen, der den kürzesten geografischen Abstand zu dem Zielort aufweist;
- Berechnen der jeweiligen Teilrouten und Berechnen der Streckenlänge und Zeitdauer für jede Teilroute;
- Auswählen desjenigen der vorausgewählten Punkte als Übergabepunkt, bei dem die aus den Teilrouten zusammengesetzte Gesamtroute unter Berücksichtigung der Streckenlänge und/oder Fahrtzeit die optimale Gesamtroute ergibt.

Eine besonders bevorzugte Ausführungsform des erfindungsgemäßen Verfahrens sieht folgende Schritte vor:
- Vorauswählen mehrer lokal berechenbarer Punkte, die einen vorbestimmten maximalen geografischen Abstand zu dem Zielort aufweisen;
- Berechnen der jeweiligen Teilrouten und Berechnen der Streckenlängen und Zeitdauer für jede Teilroute;
- Auswählen desjenigen der vorausgewählten Punkte als Übergangspunkt, bei dem die aus den Teilrouten zusammengesetzte Gesamtroute unter Berücksichtigung der Streckenlänge und/oder Fahrtzeit die optimale Gesamtroute ergibt.

Die optimale Gesamtroute berücksichtigt die von dem Nutzer eingestellten Routenoptionen, (z. B. 100% schnell+0% kurz bis 0% schnell+100% kurz)

Diese Ausführungsform zieht bei der Vorauswahl einen imaginären Radius um die Zielvorgabe und berücksichtigt alle möglichen Übergabepunkte innerhalb des gebildeten Kreises. Hierbei bleibt unberücksichtigt, ob der mögliche Übergabepunkt auf oder in der Nähe einer mobil berechneten Route eines herkömmlichen Hybrid-Navigationssystem liegen würde. So kann auch eine Gesamtroute berechnet werden, die scheinbar ein Umweg wäre, aber auf Grund der zu befahrenen Straßen und/oder der berücksichtigten, aktuellen Verkehrssituation die beste Alternative darstellt.

Eine vorteilhafte Weiterführung sieht vor, dass die vorausgewählten Punkte an vorhandenen Kreuzungen bzw. Abzweigungen liegen. Dies schränkt die Vorauswahl etwas ein, reduziert aber den Rechenaufwand und führt somit zu einem schnelleren Ergebnis.

Alternativ kann bei einer Weiterführung vorgesehen sein, dass die vorausgewählten Punkte an vorhandenen Kreuzungen bzw. Abzweigungen oder etwa mittig zwischen diesen Kreuzungen liegen.

Nachfolgend wird das erfindungsgemäße Verfahren anhand der beigefügten Zeichnungen beispielhaft näher erläutert. Diese zeigen in:
- Figur 1a -: ein erstes Beispiel zur Bestimmung des Übergabepunktes;
- Figur 1b -: den Kartenausschnitt aus Figur 1a zusätzlich mit der vom stationären Routenserver berechneten Teilroute;
- Figur 2 -: ein zweites Beispiel zur Bestimmung des Übergabepunktes;
- Figur 3a -: ein drittes Beispiel mit mehreren ausgewählten Punkten;
- Figur 3b -: den Kartenausschnitt aus Figur 3a zusätzlich mit den jeweiligen berechneten Teilrouten;
- Figur 4a -: ein viertes Beispiel mit mehreren ausgewählten Punkten;
- Figur 4b -: den Kartenausschnitt aus Figur 4a zusätzlich mit den jeweiligen neu berechneten Teilrouten.

Ein mobiler Navigationsclient weist eine digitalisierte Karte mit eingeschränkter Länderabdeckung oder eingeschränkter Kartengenauigkeit sowie einen Algorithmus zur Routenberechnung auf. Ferner kann das System eine Kommunikationsverbindung zu einem zentralen Routenserver aufbauen. Der Routenserver hat umfangreiche Kartendaten, idealerweise eine 100 %-ige Abdeckung, mit einer hohen Auflösung und einem hohem Aktualisierungsgrad. Schließlich weist der Routenserver auch einen Algorithmus zur Berechnung einer Route auf.

Wenn der Nutzer, der in einem Fortbewegungsmittel mit dem dort angeordneten mobilen Navigationsclient unterwegs ist, ein Ziel wünscht, welches in den Kartendaten des mobilen Navigationsclients nicht vorhanden ist, wird über eine Mobilfunkverbindung dieses Ziel bei einem zentralen Routenserver angefragt. Kennt der Routenserver dieses Ziel aufgrund der ihm zur Verfügung stehenden Datenbank, teilt er dies dem mobilen Navigationsclient mit. Beispielsweise übermittelt der mobile Navigationsclient nach Bestätigung eines Ziels auf Basis des textuell beschriebenen vom Routenserver an den Navigationsclient übertragenen Ziels die Zielvorgabe in einer Textdarstellung und der stationäre Routenplaner sendet die Koordinaten zurück.

Die Gesamtroute zwischen dem Startort und dem Zielort wird in mindestens zwei Teilrouten aufgeteilt, wobei der erste Teil bis zu dem Übergabepunkt vom mobilen Navigationsclient und der zweite Teil anschließend an dem Übergabepunkt vom zentralen Routenserver berechnet wird. Der zweite Teil der Gesamtroute wird an den mobilen Navigationsclient über die vorstehend erwähnte Mobilfunkstrecke übertragen. Vom Startort bis zum Übergabepunkt wird der Nutzer entlang der vom mobilen Navigationsclient berechneten ersten Teilroute geführt. Am Übergabepunkt schaltet der mobile Navigationsclient auf die durch den zentralen Routenserver berechnete zweite Teilroute um.

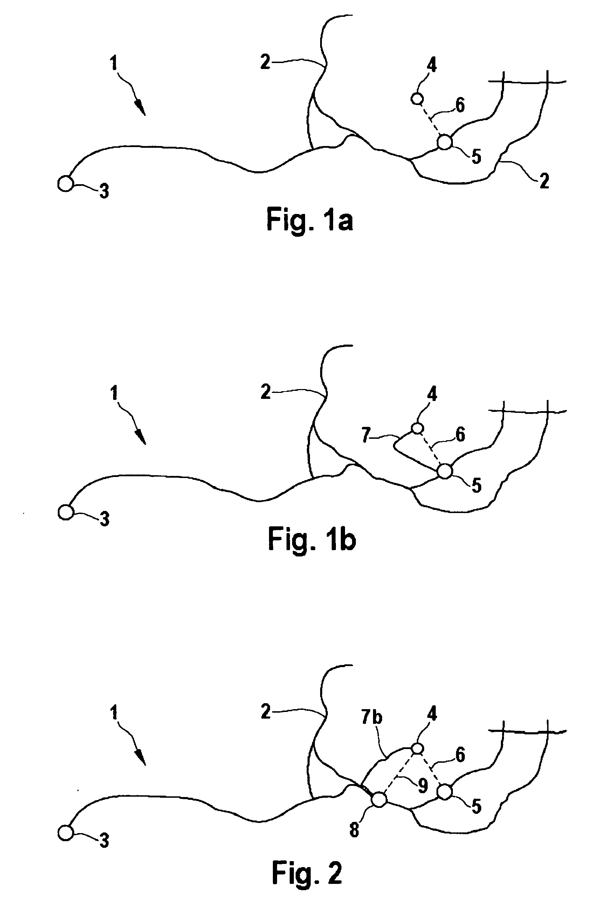

Die geeignete Bestimmung des Übergabepunktes ist wesentlich für eine effiziente Ausführung des erfindungsgemäßen Navigationsverfahrens. Anhand der Figur 1a und b wird ein erstes Beispiel zur Bestimmung des Übergabepunktes vorgestellt. Die Figur 1a zeigt einen Kartenausschnitt 1 auf dem die Verläufe verschiedener Straßen 2 dargestellt sind. Mit der Bezugsziffer 3 ist der Startort und mit der Bezugsziffer 4 der Zielort für die Routenberechnung bezeichnet. Während der Startort 3 auf oder an einer dem mobilen Navigationsclient bekannten Straße liegt, befindet sich der Zielort 4 außerhalb der Kartendaten, die dem mobilen Navigationsclient zur Verfügung stehen.

Aufgrund der Kommunikation zwischen dem mobilen Kommunikationssystem und dem zentralen Routenserver sind dem mobilen Navigationsclient die Koordinaten des Zielortes bekannt, ohne dass es eine befahrbare, vollständige Route ausrechnen kann. Aufgrund der bekannten Koordinaten des Zielortes 4 bestimmt der mobile Navigationsclient einen Punkt 5 in den ihm zur Verfügung stehenden Kartendaten und legt diesen Punkt 5 als Übergabepunkt fest. Die Bestimmung erfolgt in diesem Beispiel anhand der Bedingung, dass der durch die Strichlinie 6 angedeutete Luftlinienabstand zwischen dem Übergabepunkt 5 und dem Zielort 4 der kleinste Luftlinienabstand zwischen dem Zielort 4 und allen dem mobilen Navigationsclient zur Verfügung stehenden Punkten in den Kartendaten ist.

Nach der Bestimmung des Übergabepunktes 5 durch den mobilen Navigationsclient wird dieser Punkt 5 dem zentralen Routenserver über die Mobilfunkverbindung mitgeteilt. Der zentrale Routenserver berechnet nun eine Teilroute zwischen dem Übergabepunkt 5 und dem Zielort 4. Diese Teilroute ist in der Figur 1b mit der Bezugsziffer 7 gekennzeichnet. Obwohl dieses Verfahren einfach umzusetzen ist, da nur auf die Kartendaten des mobilen Navigationsclients zur Bestimmung des Übergabepunktes zugegriffen wird, kann es jedoch vorkommen, dass der Nutzer einen Umweg fährt, da der Verlauf der Teilroute 7 im Regelfall nicht der Luftlinie entspricht, wie in der Figur 1 b gezeigt wird.

In der Figur 2 ist ein weiteres Beispiel zur Bestimmung des Übergabepunktes dargestellt. Die Figur 2 zeigt wiederum den Kartenausschnitt 1 mit dem aus der Figur 1 bekannten Straßenverlauf 2. Ebenfalls identisch sind der Startort 3 und der Zielort 4. Als Übergabeort wird nicht der Punkt 5 festgelegt, der den kürzesten Luftlinienabstand 6 zum Zielort 4 aufweist, sondern der Punkt 8, der auf der Route zwischen dem Startort 3 und dem Punkt 5 liegt. Obwohl der Übergabepunkt 8 eine größere Luftlinienentfernung 9 zum Zielort 4 aufweist, kann die Gesamtstrecke der Route geringer sein.

Dabei sind Randbedingungen zu definieren, um zu verhindern, dass als Übergabepunkt der Startpunkt 3 gewählt wird, da die kürzeste Entfernung zwischen Startort 3 und Zielort 4 die direkte Luftlinie ist. Mögliche Randbedingungen sind beispielsweise, dass der Luftlinienabstand 9 nicht größer als der doppelte oder dreifache Wert des kürzesten Luftlinienabstandes 6 betragen darf. Eine weitere Randbedingung kann sein, dass die Streckenlänge der Teilroute zwischen Startort 3 und Übergabepunkt 8 größer als die Hälfte der Streckenlänge der Teilroute zwischen dem. Startort 3 und dem Übergabepunkt 5 sein muss. Wie aus der Figur 2 ersichtlich, ist die Gesamtroute zwischen dem Startort 3 und dem Zielort 4 (mit Teilroute 7b) in diesem Beispiel geringer als die in der Figur 1b gezeigte Gesamtroute.

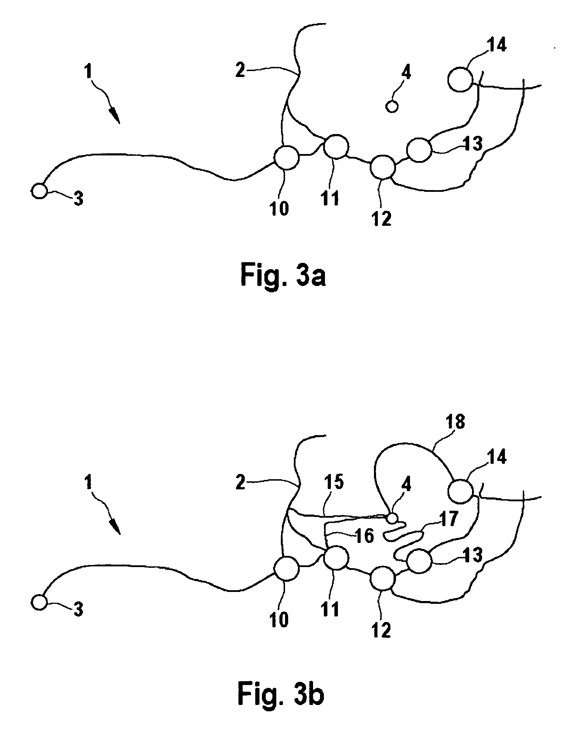

Bei dem Ausführungsbeispiel, das anhand der Figuren 3a und 3b erläutert wird, wählt der mobile Navigationsclient mehrere Punkte 10 - 14 als Vorauswahl aus den ihm zur Verfügung stehenden Kartendaten aus. Diese werden als mögliche Übergabepunkte dem zentralen Routenserver übermittelt. Der zentrale Routenserver berechnet nun für jeden Übergabepunkt 10 - 14 eine Teilroute 15 - 18. Ferner werden für jede der Teilrouten 15 - 18 die Fahrzeiten und die Streckenlängen berechnet und dem mobilen Navigationsclient mitgeteilt. Der mobile Navigationsclient berechnet nun für alle Gesamtrouten die Gesamtfahrzeiten bzw. Gesamtfahrtstrecken und ermittelt anschließend die optimale Gesamtroute.

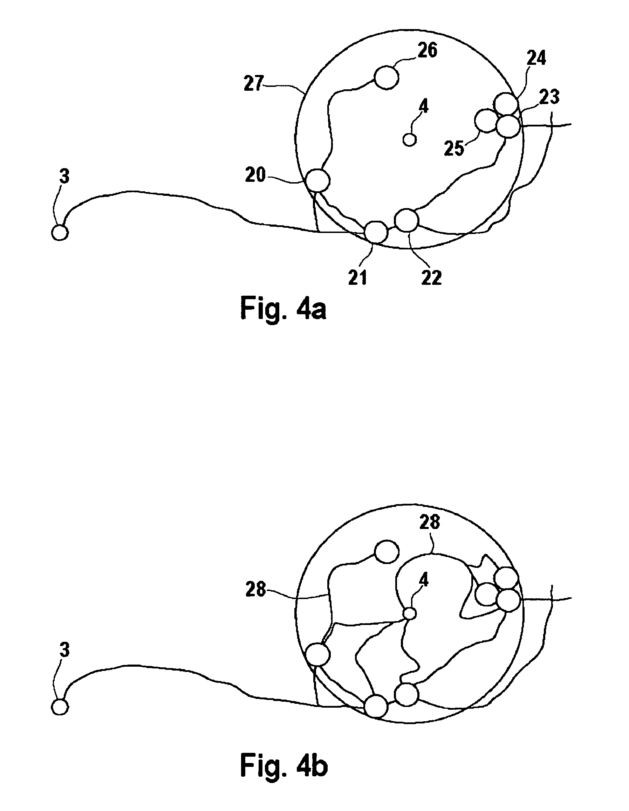

In der Figur 4a sind mögliche Übergabepunkte 20 - 26 von dem mobilen Navigationsclient ausgewählt. Alle ausgewählten Punkte liegen innerhalb eines vorbestimmten Radius 27 von dem Zielort 4 entfernt. Weitere Bedingungen zur Auswahl der Punkte 20 - 26 können sein, dass alle diese möglichen Übergabepunkte an einer Kreuzung oder in etwa der Mitte zwischen zwei Kreuzungen liegen. Wie bereits anhand des Beispieles der Figuren 3a und 3b erläutert, werden für alle möglichen Übergabepunkte die Teilrouten 28, wie in der Figur 4b dargestellt, von dem zentralen Routenserver berechnet und anschließend dem mobilen Navigationsclient mitgeteilt. Dieses wählt unter Berücksichtigung der Fahrtzeiten bzw. Fahrtstrecken der Gesamtrouten die günstigste Gesamtroute aus und führt anhand dieser ausgewählten Gesamtroute den Nutzer vom Startort 3 zu dem Zielort 4.

## Patentansprüche

1. Verfahren zur Navigation von einem Startort zu einem Zielort, bei dem eine Gesamtroute berechnet wird, die zumindest in zwei Teilrouten aufgeteilt wird, von denen zumindest eine Teilroute lokal in einem mobilen Navigationsclient mit Kartendaten, die eine eingeschränkte Aktualität und/oder Abdeckung aufweisen und zumindest eine weitere Teilroute zentral in einem stationären Routenserver berechnet wird, **dadurch gekennzeichnet, dass** zumindest ein Übergabepunkt als Endpunkt einer ersten Teilroute und Startpunkt einer zweiten Teilroute in Abhängigkeit von dem geographischen Abstand der möglichen Übergabepunkte zum Zielort und der resultierenden Gesamtroute ermittelt wird.

2. Verfahren nach Anspruch 1, **gekennzeichnet durch** folgende Schritte:
- Erkennen, dass die Gesamtroute zum Zielort lokal nicht berechenbar ist;
- Übermitteln des Zielortes von dem mobilen Navigationsclient an den stationären Routenserver;
- Übermitteln einer Ziel-Liste an den mobilen Navigationsclient;
- Bestätigen eines Ziels **durch** den Nutzer im Navigationsclient;
- Ermitteln zumindest eines Übergabepunktes;
- Übermitteln des Übergabepunktes an den Routenserver;
- Berechnen der jeweiligen Teilroute von dem ausgewählten Übergabepunkt zu dem Zielort in dem stationären Routenserver;
- Übermitteln der jeweiligen, berechneten Teilroute an den mobilen Navigationsclient.

3. Verfahren nach Anspruch 2, **dadurch gekennzeichnet, dass** als Übergabepunkt der Punkt auf der lokal berechenbaren Teilroute ausgewählt wird, der den kürzesten geografischen Abstand zu dem Zielort aufweist.

4. Verfahren nach Anspruch 2, **dadurch gekennzeichnet, dass** als Übergabepunkt ein Punkt auf der lokal berechenbaren Teilroute ausgewählt wird, der zwischen dem Startort und dem Punkt auf der Teilroute liegt, der den kürzesten geografischen Abstand zu dem Zielort aufweist.

5. Verfahren nach Anspruch 2, **gekennzeichnet durch**
- Vorauswählen mehrerer Punkte auf der lokal berechenbaren Teilroute, die zwischen dem Startort und dem Punkt auf der Teilroute liegen, der den kürzesten geografischen Abstand zu dem Zielort aufweist;
- Berechnen der jeweiligen Teilrouten und Berechnen der Streckenlänge und Zeitdauer für jede Teilroute;
- Auswählen desjenigen der vorausgewählten Punkte als Übergabepunkt, bei dem die aus den Teilrouten zusammengesetzte Gesamtroute unter Berücksichtigung der Streckenlänge und/oder Fahrtzeiten die optimale Gesamtroute ergibt.

6. Verfahren nach Anspruch 2, **gekennzeichnet durch**:
- Vorauswählen mehrerer lokal berechenbarer Punkte, die einen vorbestimmten maximalen geografischen Abstand zu dem Zielort aufweisen;
- Berechnen der jeweiligen Teilrouten und berechnen der Streckenlänge und Zeitdauer für jede Teilroute;
- Auswählen desjenigen der vorausgewählten Punkte als Übergabepunkt, bei dem die aus den Teilrouten zusammengesetzte Gesamtroute unter Berücksichtigung der Streckenlänge und/oder Fahrtzeit die optimale Gesamtroute ergibt.

7. Verfahren nach einem der Ansprüche 3 bis 6, **dadurch gekennzeichnet, dass** die vorausgewählten Punkte an vorhandenen Kreuzungen bzw. Abzweigungen liegen.

8. Verfahren nach einem der Ansprüche 3 bis 6, **dadurch gekennzeichnet, dass** die vorausgewählten Punkte an vorhandenen Kreuzungen bzw. Abzweigungen oder etwa mittig zwischen diesen Kreuzungen liegen.

## Claims

1. Method for navigating from a starting location to a destination, in which a whole route is computed which is split into at least two subroutes, at least one subroute of which is computed locally in a mobile navigation client using map data which have restricted currency and/or coverage, and at least one further subroute of which is computed centrally in a fixed route server, **characterized in that** at least one transfer point is ascertained as the end point of a first subroute and the starting point of a second subroute on the basis of the geographical distance of the possible transfer points from the destination and the resulting whole route.

2. Method according to Claim 1, **characterized by** the following steps:
- identification that the whole route to the destination cannot be computed locally;
- transmission of the destination from the mobile navigation client to the fixed route server;
- transmission of a destination list to the mobile navigation client;
- confirmation of a destination by the user in the navigation client;
- ascertainment of at least one transfer point;
- transmission of the transfer point to the route server;
- computation of the respective subroute from the selected transfer point to the destination in the fixed route server;
- transmission of the respective, computed subroute to the mobile navigation client.

3. Method according to Claim 2, **characterized in that** the transfer point selected is the point on the locally computable subroute which is at the shortest geographical distance from the destination.

4. Method according to Claim 2, **characterized in that** the transfer point selected is a point on the locally computable subroute which is situated between the starting location and the point on the subroute which is at the shortest geographical distance from the destination.

5. Method according to Claim 2, **characterized by**
- preselection of a plurality of points on the locally computable subroute which are situated between the starting location and the point on the subroute which is at the shortest geographical distance from the destination;
- computation of the respective subroutes and computation of the route length and duration for each subroute;
- selection of that one of the preselected points as transfer point for which the whole route compiled from the subroutes produces the optimum whole route taking account of the route length and/or journey times.

6. Method according to Claim 2, **characterized by**:
- preselection of a plurality of locally computable points which are at a predetermined maximum geographical distance from the destination;
- computation of the respective subroutes and computation of the route length and duration for each subroute;
- selection of that one of the preselected points as transfer point for which the whole route compiled from the subroutes produces the optimum whole route taking account of the route length and/or journey time.

7. Method according to one of Claims 3 to 6,
**characterized in that** the preselected points are situated at existing junctions or turn-offs.

8. Method according to one of Claims 3 to 6,
**characterized in that** the preselected points are situated at existing junctions or turn-offs or approximately centrally between these junctions.

## Revendications

1. Procédé de navigation d'un lieu de départ jusqu'à un lieu de destination avec lequel un itinéraire total est calculé, lequel est divisé en au moins deux itinéraires partiels parmi lesquels au moins un itinéraire partiel est calculé localement dans un client de navigation mobile avec des données cartographiques qui présentent une actualité et/ou une couverture limitées et au moins un autre itinéraire partiel est calculé de manière centralisée dans un serveur d'itinéraire fixe, **caractérisé en ce qu'**au moins un point de transfert est déterminé comme point final d'un premier itinéraire partiel et comme point de départ d'un deuxième itinéraire partiel en fonction de la distance géographique des points de transfert possibles au lieu de destination et l'itinéraire total qui en résulte.

2. Procédé selon la revendication 1, **caractérisé par** les étapes suivantes :
- Reconnaissance du fait que l'itinéraire total jusqu'au lieu de destination ne peut pas être calculé localement,
- Communication du lieu de destination du client de navigation mobile au serveur d'itinéraire fixe,
- Communication d'une liste de destinations au client de navigation mobile,
- Confirmation d'une destination par l'utilisateur dans le client de navigation mobile,
- Détermination d'au moins un point de transfert,
- Détermination du point de transfert sur le serveur d'itinéraire,
- Calcul de l'itinéraire partiel correspondant à partir du point de transfert sélectionné jusqu'au lieu de destination dans le serveur d'itinéraire fixe,
- Détermination de l'itinéraire partiel à chaque fois calculé sur le client de navigation mobile.

3. Procédé selon la revendication 2, **caractérisé en ce que** le point de transfert choisi est le point sur l'itinéraire partiel calculable localement qui présente la distance géographique la plus courte jusqu'au lieu de destination.

4. Procédé selon la revendication 2, **caractérisé en ce que** le point de transfert choisi est un point sur l'itinéraire partiel calculable localement qui se trouve entre le lieu de départ et le point sur l'itinéraire partiel qui présente la distance géographique la plus courte jusqu'au lieu de destination.

5. Procédé selon la revendication 2, **caractérisé par**
- Présélection de plusieurs points sur l'itinéraire partiel calculable localement, lesquels se trouvent entre le lieu de départ et le point sur l'itinéraire partiel qui présente la distance géographique la plus courte jusqu'au lieu de destination,
- Calcul des itinéraires partiels respectifs et calcul de la longueur du trajet ainsi que la durée de chaque itinéraire partiel,
- Sélection, parmi les points présélectionnés, du point de transfert comme étant celui avec lequel l'itinéraire total constitué des itinéraires partiels permet d'obtenir l'itinéraire total optimal en considération de la longueur du trajet et/ou des durées.

6. Procédé selon la revendication 2, **caractérisé par**
- Présélection de plusieurs points calculable localement, lesquels présentent une distance géographique maximale prédéfinie jusqu'au lieu de destination,
- Calcul des itinéraires partiels respectifs et calcul de la longueur du trajet ainsi que la durée de chaque itinéraire partiel,
- Sélection, parmi les points présélectionnés, du point de transfert comme étant celui avec lequel l'itinéraire total constitué des itinéraires partiels permet d'obtenir l'itinéraire total optimal en considération de la longueur du trajet et/ou des durées.

7. Procédé selon l'une des revendications 3 à 6, **caractérisé en ce que** les points présélectionnés se trouvent sur des intersections ou des bifurcations existantes.

8. Procédé selon l'une des revendications 3 à 6, **caractérisé en ce que** les points présélectionnés se trouvent sur des intersections ou des bifurcations existantes ou encore approximativement au centre entre ces intersections.
